# EUROPÄISCHE PATENTSCHRIFT

(11) **EP 1 473 536 B1**
(45) Veröffentlichungstag und Bekanntmachung des Hinweises auf die Patenterteilung: **17.10.2007**
(21) Anmeldenummer: 04009275.1
(22) Anmeldetag: 20.04.2004
(51) Int. Cl.: F42B 3/00, B23D 15/14, H01H 39/00

(54) **Gehäuse für eine pyromechanische Trennvorrichtung mit integriertem Anzündelement**
Housing for a pyromechanical cutting device with integrated igniting element
Boîtier pour dispositif de découpe pyrotechnique avec élément d'allumage intégré

(30) Priorität: 30.04.2003 DE 10319749; 05.03.2004 DE 102004010746
(43) Veröffentlichungstag der Anmeldung: 03.11.2004
(73) Patentinhaber: Delphi Technologies, Inc., Troy, MI 48007 (US)
(72) Erfinder: Knauss, Jürgen, 90587 Obermichelbach (DE); Kordel, Gerhard, 90455 Nürnberg-Kornburg (DE)
(74) Vertreter: Schmidt, Christian

(56) Entgegenhaltungen:
- DE-A- 4 307 774
- DE-A- 19 616 993
- US-A- 5 877 563
- US-B1- 6 496 098

## Beschreibung

Die Erfindung betrifft eine pyromechanische Trennvorrichtung nach dem Oberbegriff des Anspruchs 1 (vgl. US-A-5,877,563).

Aus der DE 43 07 774 A ist eine elektrische Anzündeinrichtung bekannt, bei der ein Aufnahmeteil für einen Zündwiderstand mit Kunststoff umspritzt und in ein Gehäuse eingesetzt ist.

Es ist die Aufgabe der vorliegenden Erfindung, eine pyromechanische Trennvorrichtung der vorstehend genannten Art so weiterzubilden, dass dieses kostengünstig herstellbar ist.

Die Lösung dieser Aufgabe erfolgt durch die Merkmale des Anspruchs 1.

Erfindungsgemäß entfällt der komplette Einsetzvorgang des Anzündelements in das Gehäuse.

Die Umspritzung des Anzündelements hat gleichzeitig die Funktion eines Gehäuses für eine pyromechanische Trennvorrichtung.

In bevorzugter Ausführungsform besteht das Gehäuse aus einem elektrisch isolierenden Material, insbesondere aus einem Kunststoff.

Vorteilhafterweise sind im isolierenden Material festigkeitserhöhende Füllstoffe wie Glasfasern oder Kohlenstofffasern angeordnet.

Erfindungsgemäß sind die Anschlusspins des Anzündelements für eine elektrische Kontaktierung in einer Ausnehmung des Gehäuses angeordnet.

In einer Ausführungsform sind die Anschlusspins des Anzündelements gegeneinander isoliert. Dies kann auf Grund der Materialeigenschaften des Gehäuses erforderlich sein.

Erfindungsgemäß weist im Bereich des Anzündelements das Innere des Gehäuses eine umlaufende Ausnehmung zum Aufstecken des Trennmeißels auf.

In besonderer Ausführungsform ist in der umlaufenden Ausnehmung an der zum Anzündelement gewandten Seite eine umlaufende Nut angeordnet, in der ein Dichtungsring eingelassen ist. Dieser Dichtungsring kann z. B. ein O-Ring sein.

Nachfolgend wird die Erfindung an Hand von zwei Figuren näher erläutert.

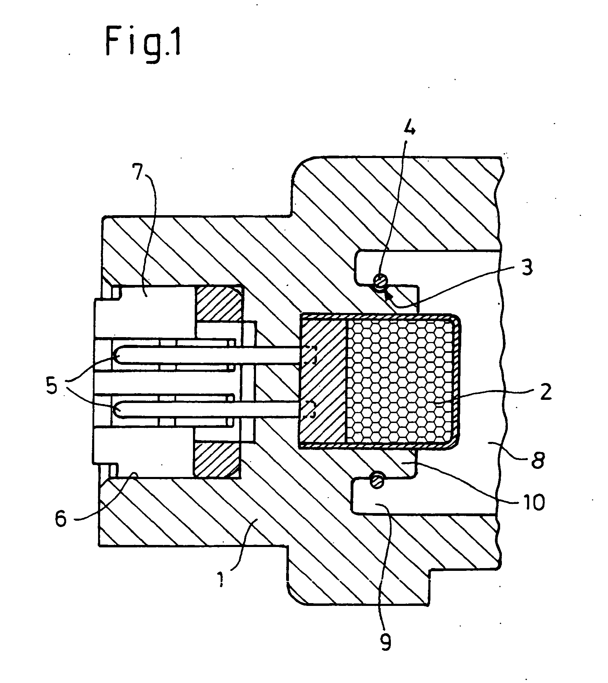

Fig. 1 zeigt einen Ausschnitt aus einer pyromechanischen Trennvorrichtung zur Batterieabschaltung in einem Kraftfahrzeug mit einem Anzündelement 2, welches vom Gehäuse 1 umspritzt ist und dadurch mit dem Gehäuse 1 eine Baueinheit bildet. Das Gehäuse 1 besteht aus einem elektrisch isolierenden Material wie Kunststoff, in dem festigkeitserhöhende Füllstoffe insbesondere Glasfasern oder Kohlenstofffasern enthalten sind.

Die Anschlusspins 5 sind für eine elektrische Kontaktierung vom Gehäuse 1 nicht umspritzt, sondern sind in einer Ausnehmung 6 des Gehäuses 1 angeordnet und sind in diesem Fall als Stecker 7 ausgebildet bzw. mit einem Stecker 7 verbunden.

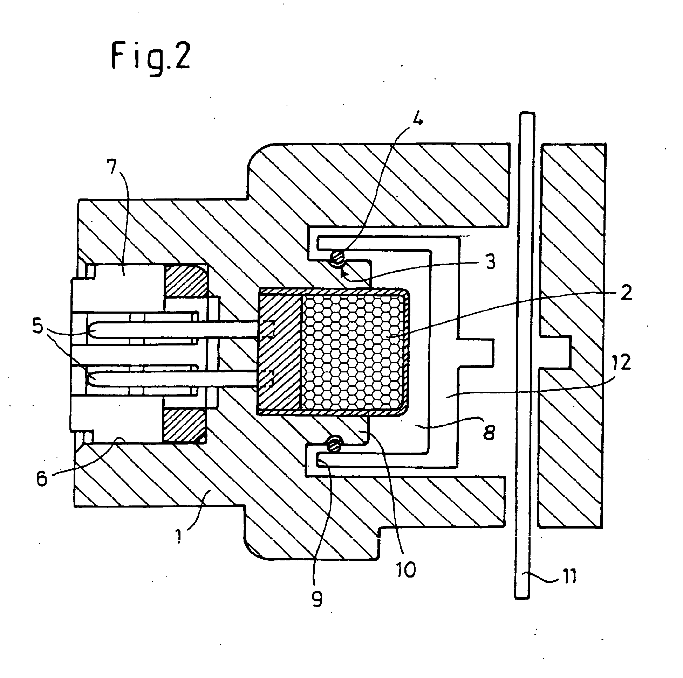

Im Inneren des Gehäuses 1 (siehe Figur 2) befindet sich ein Aufnahmeraum 8 zur Aufnahme eines Trennmeißels 12 und einer Stromleiterschiene 11, wobei die Stromleiterschiene 11 vom Trennmeißel 12 an einer Trennstelle durchtrennbar ausgebildet ist. Der Trennmeißel 12 wird durch die bei der Anzündung des Anzündelements 2 entstehenden Treibgase auf die Trennstelle beschleunigt.

Damit der Trennmeißel 12 auf das Anzündelement 2 umgreifend aufgesteckt werden kann, ist im Bereich des Anzündelements 2 im Aufnahmeraum 8 eine umlaufende Ausnehmung 9 im Gehäuse 1 angeordnet, wobei zwischen dem Anzündelement 2 und der Ausnehmung 9 eine ringförmige Auskragung 10 des Gehäuses 1 angeordnet ist. In der umlaufenden Ausnehmung 9 an der zum Anzündelement 2 gewandten Seite ist eine umlaufende Nut 3 angeordnet, in der ein Dichtungsring 4 eingelassen ist. Diese umlaufende Nut 3 ist demnach in der ringförmigen Auskragung 10 zur Ausnehmung 9 hin angeordnet. Der Trennmeißel 12 wird in diese Ausnehmung 9 gesteckt und umgreift damit das Anzündelement 2.

## Patentansprüche

1. Pyromechanische Trennvorrichtung, insbesondere zur Batterieabschaltung in einem Kraftfahrzeug, mit einem Gehäuse (1), in dem eine Stromleiterschiene (11) angeordnet ist, die von einem Trennmeissel (12) an einer Trennstelle durchtrennbar ausgebildet ist, wobei der Trennmeissel (12) durch die Treibgase eines Anzündelements (2) beschleunigbar ist,
**dadurch gekennzeichnet, dass**
das Anzündelement (2) vom Gehäuse (1) umspritzt ist und dadurch mit dem Gehäuse (1) eine Baueinheit bildet,
**dass** Anschlusspins (5) des Anzündelements (2) in einer Ausnehmung (6) des Gehäuses (1) angeordnet sind, und
**dass** im Bereich des Anzündelements (2) das Innere des Gehäuses (1) eine umlaufende Ausnehmung (9) zum Aufstecken des Trennmeissels (12) aufweist, wobei zwischen dem Anzündelement (2) und der Ausnehmung (9) eine ringförmige Auskragung (10) des Gehäuses (1) angeordnet ist.

2. Trennvorrichtung nach Anspruch 1, **dadurch gekennzeichnet, dass** das Gehäuse (1) aus einem elektrisch isolierenden Material besteht.

3. Trennvorrichtung nach Anspruch 2, **dadurch gekennzeichnet, dass** im isolierenden Material festigkeitserhöhende Füllstoffe wie Glasfasern oder Kohlenstofffasern angeordnet sind.

4. Trennvorrichtung nach einem der Ansprüche 1 bis 3, **dadurch gekennzeichnet, dass** das Gehäuse (1) aus einem Kunststoff besteht.

5. Trennvorrichtung nach Anspruch 1, **dadurch gekennzeichnet, dass** in der umlaufenden Ausnehmung (9) an der zum Anzündelement (2) gewandten Seite eine umlaufende Nut (3) angeordnet ist, in der ein Dichtungsring (4) eingelassen ist.

## Claims

1. A pyromechanical disconnecting device, in particular for battery shutoff in a motor vehicle, having a housing (1) in which a conductor bus (11) is arranged that is designed to be severable by a cutting chisel (12) at a cut point, the cutting chisel (12) being able to be accelerated by the propellant gases of an ignition element (2),
**characterized in that**
the housing (1) is molded around the ignition element (2) which in this way forms a constructional unit with the housing (1);
**in that** connecting pins (5) of the ignition element (2) are arranged in a recess (6) of the housing (1); and
**in that** the interior of the housing (1) has a peripheral recess (9) in the region of the ignition element (2) for attaching the cutting chisel (12), with a ring-shaped projection (10) of the housing (1) being arranged between the ignition element (2) and the recess (6).

2. A disconnecting device according to claim 1, **characterized in that** the housing (1) is made of an electrically insulating material.

3. A disconnecting device according to claim 2, **characterized in that** strength-enhancing fillers such as glass fibers or carbon fibers are arranged in the insulating material.

4. A disconnecting device according to any one of the claims 1 to 3, **characterized in that** the housing (1) is made of a plastic.

5. A disconnecting device according to claim 1, **characterized in that** a peripheral groove (3), in which a seal ring (4) is accommodated, is arranged in the peripheral recess (9) at the side facing toward the ignition element (2).

## Revendications

1. Dispositif de sectionnement pyromécanique, en particulier pour la coupure de la batterie d'un véhicule automobile, comportant un boîtier (1) dans lequel est disposé un rail conducteur de courant (11) qui est réalisé sectionnable par une lame de sectionnement (12) en un point de sectionnement, la lame de sectionnement (12) pouvant être accélérée par les gaz de propulsion d'un élément d'allumage (2),
**caractérisé en ce que**
l'élément d'allumage (2) est enrobé par injection par le boîtier (1) et forme de ce fait une unité de construction avec le boîtier (1),
**en ce que** des broches de connexion (5) de l'élément d'allumage (2) sont disposées dans un évidement (6) du boîtier (1), et
**en ce que** dans la zone de l'élément d'allumage (2) l'intérieur du boîtier (1) présente un évidement (9) périphérique pour l'enfichage de la lame de sectionnement (12), une collerette (10) de forme annulaire du boîtier (1) étant disposée entre l'élément d'allumage (2) et l'évidement (9).

2. Dispositif de sectionnement selon la revendication 1, **caractérisé en ce que** le boîtier (1) est constitué d'un matériau électriquement isolant.

3. Dispositif de sectionnement selon la revendication 2, **caractérisé en ce que** dans le matériau isolant sont disposées des charges accroissant la résistance telles que des fibres de verre ou des fibres de carbone.

4. Dispositif de sectionnement selon l'une des revendications 1 à 3, **caractérisé en ce que** le boîtier (1) est constitué d'une matière plastique.

5. Dispositif de sectionnement selon la revendication 1, **caractérisé en ce que** dans l'évidement périphérique (9) est disposée, sur le côté tourné vers l'élément d'allumage (2), une rainure périphérique (3), dans laquelle est encastrée une bague d'étanchéité (4).
